Europäisches Patentamt

European Patent Office

Office européen des brevets

(19)

(11) Veröffentlichungsnummer: **0 197 367**
**B1**

(12)                    # EUROPÄISCHE PATENTSCHRIFT

(45) Veröffentlichungstag der Patentschrift:
31.05.89

(21) Anmeldenummer: 86103591.3

(22) Anmeldetag: 17.03.86

(51) Int. Cl.⁴: **B 65 G  1/02**

(54) **Vorrichtung zum Lagern von Teilen im Abstand voneinander insbesondere zum Lagern von Blechen oder Blechformteilen.**

(30) Priorität: 12.04.85  DE 3513160

(43) Veröffentlichungstag der Anmeldung:
15.10.86 Patentblatt 86/42

(45) Bekanntmachung des Hinweises auf die Patenterteilung:
31.05.89 Patentblatt 89/22

(84) Benannte Vertragsstaaten:
AT BE CH DE FR GB IT LI LU NL SE

(56) Entgegenhaltungen:
DE-A-2 930 053
FR-A-2 066 216
GB-A-1 023 845

PATENT ABSTRACTS OF JAPAN, Band 8, Nr. 87 (M-291) 1524 , 20. April 1984

(73) Patentinhaber: **VEREINIGTE ALUMINIUM- WERKE AKTIENGESELLSCHAFT, Berlin - Bonn Postfach 2468 Georg- von- Boeselager- Strasse 25, D-5300 Bonn 1 (DE)**

(72) Erfinder: **Bergheim, Hans, Am Wichelshof 34, D-5300 Bonn 1 (DE)**
Erfinder: **Griep, Winfried, Kirchfeldstrasse 1, D-5300 Bonn 1 (DE)**

(74) Vertreter: **Müller- Wolff, Thomas, Dipl.- Ing., c/o Vereinigte Aluminium- Werke AG Patentabteilung Postfach 2468, D-5300 Bonn 1 (DE)**

## Beschreibung

Die Erfindung betrifft eine Vorrichtung zum Lagern von Teilen im Abstand voneinander, insbesondere zum Lagern von Blechen oder Blechformteilen, mit mindestens einer Säule o.dgl., in der um die Lagerbolzen schwenkbare Hebel gelagert sind, wobei ein beim Auflegen eines Teiles in Aufnahmelage befindlicher Hebel in seine Arbeitslage und gleichzeitig der diesem nächstfolgend angeordnete Hebel aus seiner Ruhelage in seine Aufnahmelage geschwenkt wird.

Eine Vorrichtung der eingangs genannten Art ist der DE-PS-2 930 053 zu entnehmen. Bei dieser Vorrichtung besteht jeder Hebel aus einem Steuerarm und einem Tragarm, wobei das schwerkraftbedingte Drehmoment des Steuerarms das in entgegengesetzte Richtung wirkende Drehmoment des Tragarms um soviel übersteigt, daß jeder Hebel beim Abheben der Last durch das überwiegende Drehmoment des Steuerarmes aus der Arbeitslage in die Aufnahmelage bewegt wird.

Eine derartige Vorrichtung weist einen konstanten Stapelabstand auf, der bei unterschiedlich dicken Lagergütern nicht variiert werden kann. Ferner ist es bei der bekannten Vorrichtung nicht möglich, die Stapelhöhe - also die Gesamtzahl der aufeinander gestapelten Lagergüter - zu verändern.

Aufgabe der vorliegenden Erfindung ist es, bei einer Vorrichtung der eingangs genannten Art den Stapelabstand und die Stapelhöhe variieren zu können, wobei die Vorrichtuhg das Lagern von Teilen sowohl in horizontaler als auch in vertikaler Richtung ermöglicht.

Die Aufgabe wird erfindungsgemäß durch die in den Patentansprüchen angegebenen Merkmale gelöst. Es hat sich gezeigt, daß durch die Verwendung von mit Scherengliedern verbundenen Lagerbolzen die Stapelabstände zwischen zwei Grenzwerten stufenlos und gleichmäßig für alle Hebel einstellbar sind. Der Verzicht auf Schwerkraftsteuerung und die Verwendung von Steuerketten ermöglicht den Einsatz der erfindungsgemäßen Vorrichtung sowohl in horizontaler wie in vertikaler Richtung.

Ein im wesentlichen geschlossenes Trägerprofil, das nur eine schmale Durchtrittsöffnung für die Hebel aufweist, ermöglicht die Abdeckung der Anschläge bzw. Steuerungsteile, so daß die erfindungsgemäße Vorrichtung gegen Beschädigung durch das Lagergut geschützt ist. Andererseits kann bei besonders empfindlichen Stapelgütern der Kantenschutz durch geeignete Ausbildung des Trägerprofils mit Gummi- oder Stoßleisten erhöht werden.

Es ist besonders vorteilhaft, daß trotz der nahezu vollständigen Abdeckung die Hebel ohne Demontage des Trägerprofils ausgewechselt werden können. Dies geschieht durch die schmale Durchtrittsöffnung mittels einfacher Werkzeuge. Eine Verriegelung der Hebel im belasteten Zustand ermöglicht eine sichere Lagerung der Teile auch bei schwingender Belastung.

Im folgenden wird die Erfindung anhand mehrerer Ausführungsbeispiele näher erläutert. Es zeigen:

Fig. 1 =    schematische Ansicht des Hebelsteuerung

Fig. 2 =    Prinzipbild der Positionierung der Hebel in verschiedenen Lastzuständen

Fig. 3 =    Teilquerschnitt durch eine Stapelsäule mit Verriegelungsprofil

Fig. 4 =    Einzelteile des Anschlagprofils

Fig. 5 =    Steuerungsschematik im Querschnitt

Fig. 6 =    Trägerprofil im Querschnint

Fig. 7 =    verschiedene Arten von Tragarmen

Fig. 8 =    zwei Längsschnitte durch eine 4 u. 9 komplette Stapelsäule

Fig. 10 =   Längsschnitt durch eine verlängerbare Stapelsäule

Fig. 11 =   Teillängsschnitt an der Verbindungsstelle einer verlängerbaren Stapelsäule

Fig. 12 =   Teilquerschnitt des Trägerprofils im Bereich der Verriegelung

Fig. 13 =   perspektivische Seitenansicht einer komplett montierten Stapelsäule in belastetem Zustand

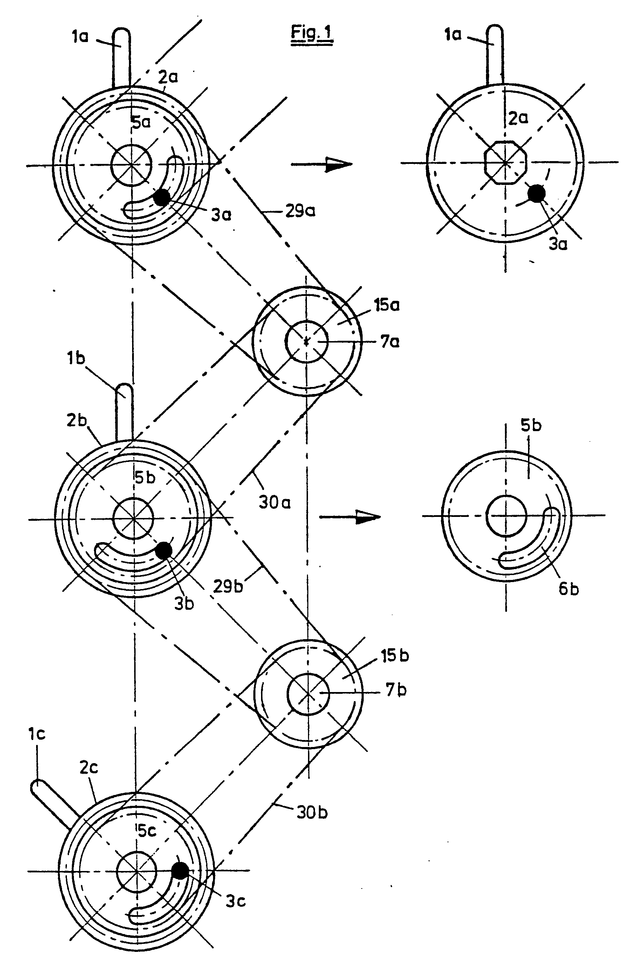

In Fig. 1 ist die Steuerungsschematik anhand von drei übereinander angeordneten Hebeln 1a, 1b, 1c dargestellt. Während die Kettenräder 2a, 2b, 2c fest mit den Hebeln 1a, 1b, 1c verbunden sind, können die Kettenräder 5a, 5b, 5c relativ zum Hebel und zum festen Kettenrad verdreht werden. Der Drehwinkel wird begrenzt durch an den festen Kettenrädern 2a, 2b, 2c angeordneten Steueranschlägen 3a, 3b, 3c, die in Steuernuten 6a, 6b, 6c der losen Kettenräder 5a, 5b, 5c eingreifen. Die Steuernut ist mit einem Steuerwinkel von 85° bis 95° vorgesehen. In einer vorteilhaften Weiterbildung der Erfindung liegt die Steuernut des korrespondierenden losen Kettenrades 5 auf einem Viertelkreisbogen im unteren Quadranten.

Zwischen den Hebeln sitzen ferner Umlenkräder 15a, b, die mit Steuerketten 29, 30 mit den jeweils zugehörigen losen und festen Kettenrädern 2, 5 verbunden sind. Durch geeignete·Wahl der Anbringung des Steueranschlages und der Bemessung des Steuerwinkels ist es möglich, die Hebel 1a, 1b, 1c in der in Patentanspruch 1 angegebenen Reihenfolge aus ihrer Ruheposition in die Aufnahme- und Lastposition zu schwenken. Hierbei wird ähnlich wie in der eingangs beschriebenen DE-PS-2 930 053 ein selbststeuerndes Klinkensystem verwirklicht, das jedoch schwerkraftunabhängig arbeitet.

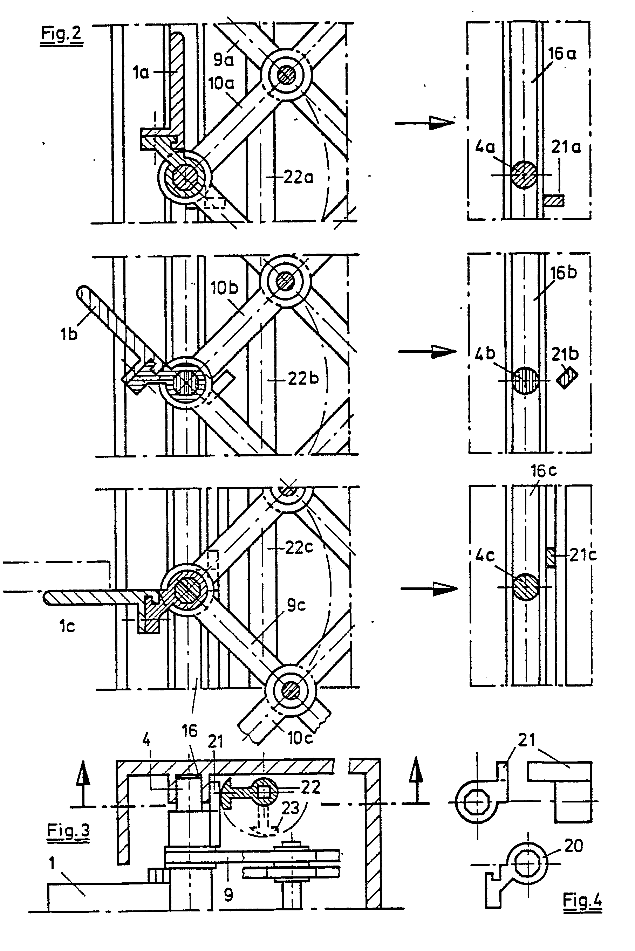

Fig. 2 zeigt nun die Positionierung der einzelnen Hebel 1a, 1b, 1c innerhalb der Stapelsäule. Dies geschieht über Scherenglieder 9a, b, c; 10a, b, c, die in Führungsnuten 16 gleiten. Im rechten Teil der Fig. 2 ist die jeweils zugehörige Position des Anschlagprofils dargestellt. In der Ruhelage befindet sich das Anschlagprofil 21a unterhalb des Lagerbolzens 4a. Es stützt sich dabei gegen die Führungsnut 16a ab. In der Aufnahmeposition ist das Anschlagprofil 21b etwa auf gleicher Höhe mit dem Lagerbolzen 4b. In der Arbeitslage stützt sich das Anschlagprofil 21c gegen die Führungsnut 16c ab, so daß die Steuerungsteile vom Drehmoment entlastet sind.

In Fig. 3 ist der Hebel 1 auf dem Lagerbolzen 4 befestigt, der in der Führungsnut 16 gehalten wird. Der Stapelabstand zwischen den Hebeln wird über das Scherenglied 9 verstellt. In der hier dargestellten Arbeitslage des Hebels 1 ist ein Exzenter 23 gegen das Anschlagprofil 21 gedrückt, so daß eine selbsthemmende Verriegelung eintritt.

Fig. 4 zeigt zwei Ansichten des Anschlagprofils 21 und das Tragprofil 20 vom Hebel 1. Es ist erkennbar, daß durch die achteckige Ausführung der Bohrung eine verdrehsichere Anbringung des Tragprofils und des Anschlagprofils auf dem Lagerbolzen 4 garantiert ist.

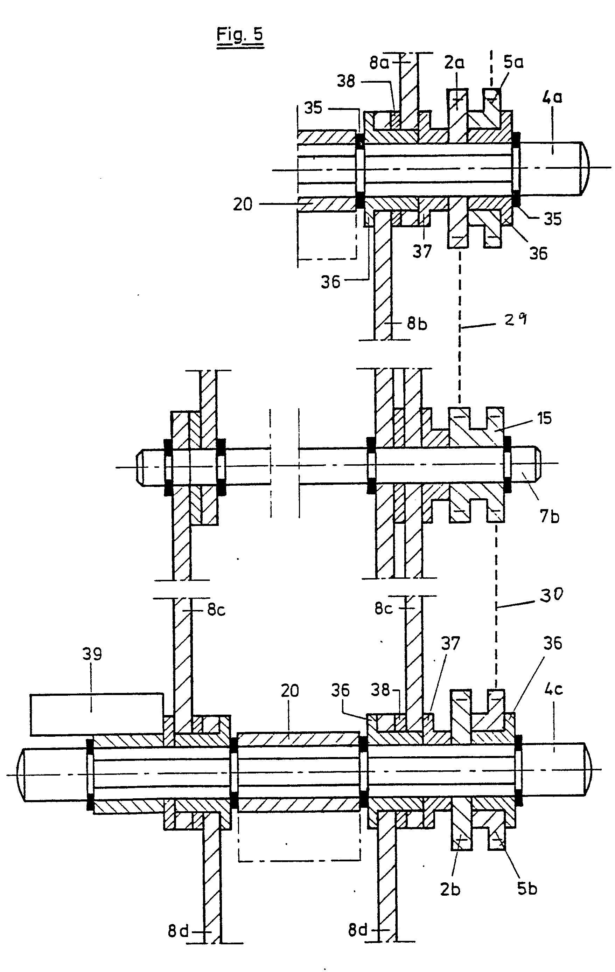

In Fig. 5 sind Scherenglieder 8a,b,c,d und Steuerketten 29, 30 mit den Kettenrädern 2a,b und dem Umlenkrad 15 zu erkennen. Auf der Welle 4a wird eine Lagerbuchse, das feste Kettenrad 2a, Distanzscheibe 37 und Scherenarm 8a mit Sicherungsringen 35 gehalten. Die Lagerungsbuchse 36 trägt das bewegliche Kettenrad 5a, das mit dem nicht mehr dargestellten, darüber liegenden Umlenkrad über eine Steuerkette verbunden ist. Das feste Kettenrad 2a ist über eine Umlenkkette mit dem losen Kettenrad 15 zur Steuerung des Tragprofils 20 verbunden. Alle übrigen auf dem Lagerbolzen 7b befindlichen Teile, wie Distanzbuchsen und Sicherungsringe, entsprechen dem oben bereits erläuterten Aufbau am Lagerbolzen 4a. Die Umlenkrolle 15 ist weiterhin über eine Steuerkette mit dem losen Kettenrad 5b auf der Welle 4b verbunden. Weitere Teile wie Lagerungsbuchse, Distanzscheibe und Sicherungsringe entsprechen dem vorher beschriebenen Aufbau der Wellen 4a und 7b. Auf der Welle 4c sind ferner die Scherenglieder 8d, das Tragprofil 20 und das Anschlagprofil 39 zu erkennen.

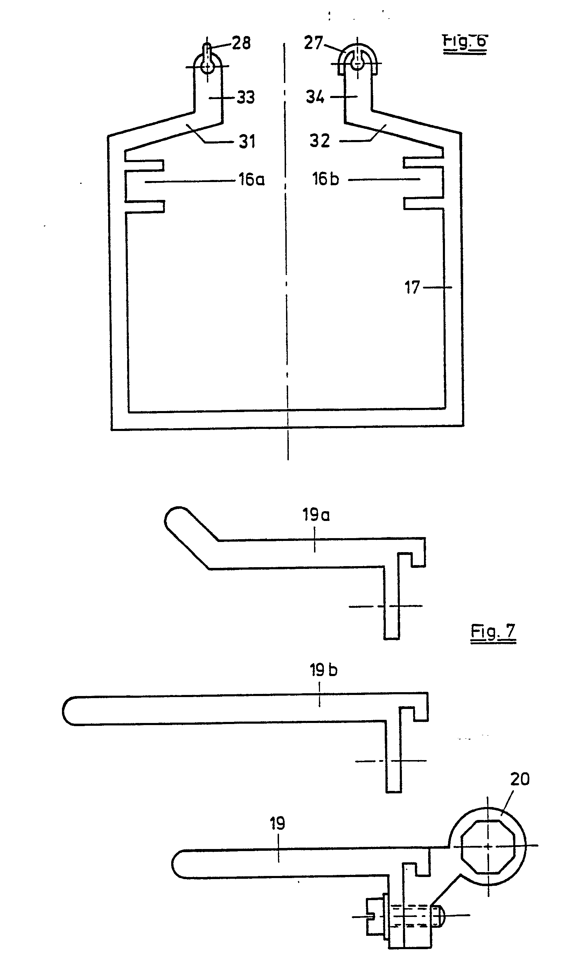

Fig. 6 zeigt einen Querschnitt durch das Trägerprofil 17 mit Führungsnuten 16a, 16b und zwei winkelförmigen Stegen, die mit jeweils einem Winkelende 31, 32 an der offenen Seite des Profils befestigt und jeweils im anderen nach außen gerichteten Schenkelende 33, 34 eine Durchtrittsöffnung für die Hebel 1 bilden. Die Schenkelenden 33, 34 können zusätzlich mit einem Kantenschutz 27, 28 ausgerüstet werden.

Aus Fig. 7 sind verschiedene Formen der Tragarme 19a, b zu erkennen. Der Tragarm 19 ist lösbar über eine Schraube mit dem Tragprofil 20 verbunden, und zwar derart, daß ein Wechsel des Tragarms 19 von der Durchtrittsöffnung des Trägerprofils 17 aus möglich ist.

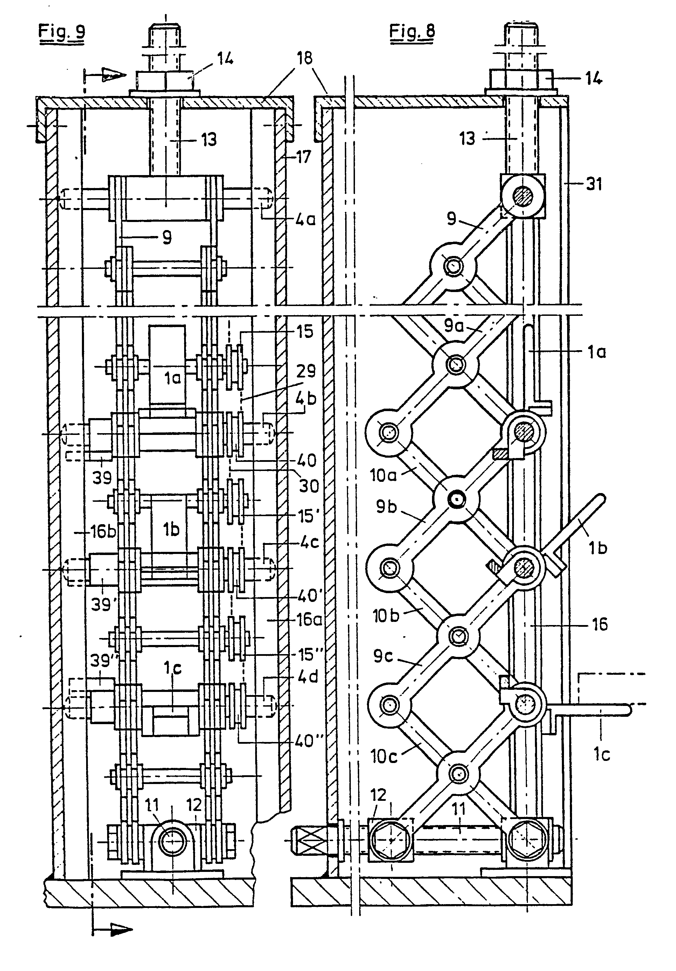

In Fig. 8 u. 9 sind Stapelsäulen in komplett montiertem Zustand dargestellt. In der Führungsnut 16 gleiten die Lagerbolzen 4, auf denen die Hebel 1 angeordnet sind. Der Abstand der Hebel 1 wird über Scherenglieder 9, 10 eingestellt. Durch Verdrehen der Spindel 11 wird die Stellmutter 12 horizontal verschoben und dadurch die Scherenweite der Glieder 9, 10 verändert. Am oberen Ende der Scherenglieder befindet sich eine Zugschraube 13, die mittels einer Mutter 14 auf dem Deckel 18 gekontert wird.

Die im Trägerprofil 17 angeordnete Nut 16b dient als Anschlag für das Anschlagprofil 39. Die Schwenkbewegung des Hebels 1 wird über Kettenräder 40 und Umlenkrollen 15 ermöglicht. Beim Entladen der Stapelvorrichtung wird der in Aufnahmeposition befindliche Hebel 1b durch das Hochziehen des Lagergutes in seine Ruhelage geschwenkt. Es ist aber auch möglich, die Schwenkbewegung bei Entlastung durch Federkraft, z. B. durch Torsionsfedern zu bewirken.

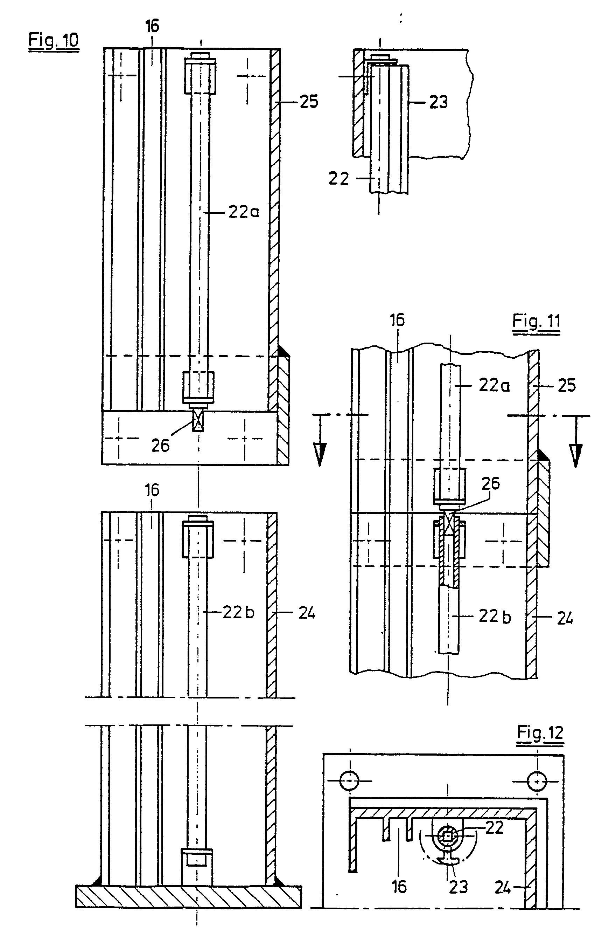

Fig. 10 zeigt eine mehrteilige Stapelsäule, bestehend aus der Grundsäule 24 und dem Aufsatz 25. Parallel zur Führungsnut 16 sind Verriegelungsprofile 22a, 22b zu erkennen, die einen Exzenter 23 aufweisen.

In Fig. 11 ist die mehrteilige Stapelsäule in zusammengestecktem Zustand dargestellt. Eine verdrehsichere Verbindung zwischen den Verriegelungsprofilen 22a, b wird durch die Aufsteckachse 26 gewährleistet.

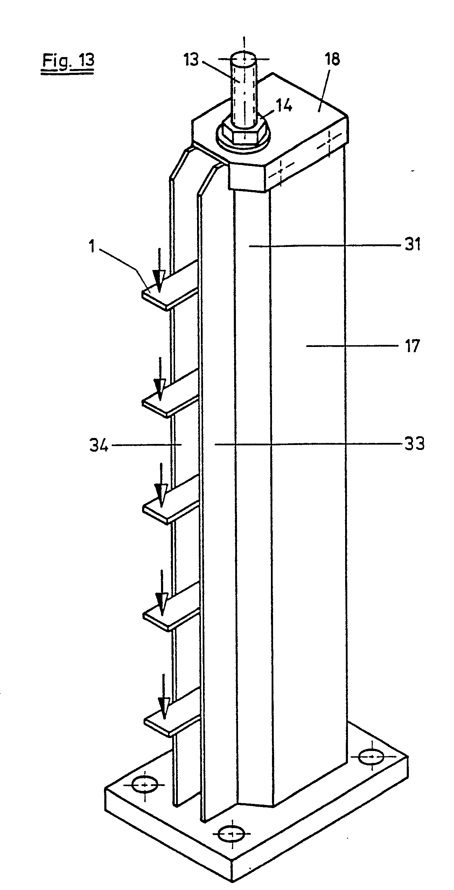

In Fig. 12 ist noch einmal ein Teilquerschnitt durch die Grundsäule 24 mit dem Verriegelungsprofil 22 und dem Exzenter 23 dargestellt. Anstelle des Exzenters können auch andere Verriegelungsarten, kraftschlüssig oder formschlüssig verwendet werden.

Fig. 13 zeigt einen kompletten Aufbau der Stapelsäule. Es sind die Hebel 1, das Trägerprofil 17, der Deckel 18, die Schenkelenden 31, 33, 34 und die Zugschraube 13 mit Zugmutter 14 zu erkennen. Diese dienen einer Zugentlastung der Scherenglieder. Die Einzelteile der erfindungsgemäßen Vorrichtung können aus Metall, insbesondere Aluminium, aber auch aus Kunststoff und Kombinationen von Kunststoff-Metall hergestellt werden. Beim Einsatz von Aluminium werden vorzugsweise stranggepreßte Profile und Hebel verwendet.

**Patentansprüche**

1. Vorrichtung zum Lagern von Teilen im Abstand voneinander, insbesondere zum Lagern von Blechen oder Blechformteilen, mit mindestens einer Säule (24, 25) o.dgl., in der um die Lagerbolzen (4) schwenkbare Hebel (1) gelagert sind, wobei ein beim Auflegen eines Teiles in Aufnahmelage befindlicher Hebel (1a) in seine Arbeitslage und gleichzeitig der diesem nächstfolgend angeordnete Hebel (1b) aus seiner Ruhelage in seine Aufnahmelage geschwenkt wird, dadurch gekennzeichnet, daß der Hebel (1) mit einem Kettenrad (2) fest verbunden ist, an dem sich ein Steueranschlag (3) senkrecht zur Radebene befindet, daß auf jedem Lagerbolzen (4) parallel zum festen Kettenrad (2) ein loses Kettenrad (5) gelagert ist, das in der Radebene eine Steuernut (6) mit einem Steuerwinkel von 85 bis 95° aufweist, in die der Steueranschlag (3) eingreift, und daß der Abstand der Lagerbolzen (4) untereinander über Scherenglieder (8) einstellbar ist.

2. Vorrichtung nach Anspruch 1, dadurch gekennzeichnet, daß der Steueranschlag (3) im unteren rechten Quadranten des festen Kettenrades (2) angeordnet ist und die Steuernut (6) des korrespondierenden losen Kettenrades (5) auf einem Viertelkreisbogen im unteren Quadranten liegt.

3. Vorrichtung nach einem der vorhergehenden Ansprüche, dadurch gekennzeichnet, daß die Scherenglieder (8) zwischen den Lagerbolzen (4) aus Kniehebeln (9, 10) bestehen und die Scherenweite bzw. der Stapelabstand zwischen den Hebeln (1) über eine horizontal angebrachte Spindel (11) regulierbar ist, die mit dem untersten Scherenglied (8d) über eine Stellmutter (12) verbunden ist.

4. Vorrichtung nach einem der vorhergehenden Ansprüche, dadurch gekennzeichnet, daß das Ende des oberen Scherengliedes (9) eine Zugschraube (13) aufweist, die beim Verstellen der Scherenweite mit einer Zugmutter (14) in der Säule (24, 25) gekontert wird.

5. Vorrichtung nach einem der vorhergehenden Ansprüche, dadurch gekennzeichnet, daß die Lagerbolzen (4) in Führungsnuten (16a, b) eines säulenartigen Trägerprofiles (17) gleiten.

6. Vorrichtung nach einem der vorhergehenden Ansprüche, dadurch gekennzeichnet, daß das Trägerprofil (17) am oberen Ende einen Deckel (18) aufweist, der zumindest die Führungs- und Anschlagselemente abdeckt.

7. Vorrichtung nach Anspruch 6, dadurch gekennzeichnet, daß die Zugschraube (13) durch den Deckel (18) hindurchgeführt ist und mit einer Zugmutter (14) gekontert wird.

8. Vorrichtung nach einem der vorhergehenden Ansprüche, dadurch gekennzeichnet, daß jeder Hebel (1) aus einem Tragarm (19) und einem Tragprofil (20) besteht, das verdrehsicher auf dem Lagerbolzen (4) sitzt und mit dem Tragarm (19) lösbar verbunden ist.

9. Vorrichtung nach Anspruch 8, dadurch gekennzeichnet, daß das Tragprofil (20) eine achteckige Bohrung aufweist und der Lagerbolzen (4) im Bereich des Tragprofils (20) achtkantig ausgebildet ist.

10. Vorrichtung nach einem der vorhergehenden Ansprüche, dadurch gekennzeichnet, daß die Hebel (1) mindestens je eine Anschlagfläche aufweisen, die in der Arbeits- und Ruhelage gegen Stege des säulenartigen Trägerprofils (17) anschlägt.

11. Vorrichtung nach einem der vorhergehenden Ansprüche, dadurch gekennzeichnet, daß die Anschlagfläche der Hebel (1) auf einem gesonderten Anschlagprofil (21) ausgebildet ist, das mit achteckiger Bohrung auf dem entsprechend angeformten Lagerbolzen (4) sitzt, wobei die Anschlagfläche fingerförmig gegen die Außenseite der Führungsnut (16) anschlägt.

12. Vorrichtung nach einem der vorhergehenden Ansprüche, dadurch gekennzeichnet, daß parallel zur Führungsnut (16) ein Verriegelungsprofil (22) an dem Trägerprofil (17) angebracht ist, das über einen Exzenter (23) die Anschlagfläche des Anschlagprofils gegen die äußere Wand der Führungsnut angepreßt.

13. Vorrichtung nach Anspruch 12, dadurch gekennzeichnet, daß die Säule aus einer Grundsäule (24) mit den Scherengliedern und einem Aufsatz (25) ohne Scherenglieder besteht, wobei die Verriegelungsprofile (22) in der Grundsäule (24) und im Aufsatz (25) über eine Aufsteckachse (26) miteinander verdrehsicher verbunden sind.

14. Vorrichtung nach Ansprüchen 12 oder 13, dadurch gekennzeichnet, daß die offenen Enden des Trägerprofils mit einem Kantenschutz (27, 28) ausgerüstet sind.

15. Vorrichtung nach einem der vorhergehenden Ansprüche, dadurch gekennzeichnet, daß die Säule (24, 25) aus einem U-Profil besteht, an das sich an der offenen Seite 2 winkelförmige Stege anschließen, die mit jeweils einem Schenkelende (31, 32) an der offenen Seite des U-Profils befestigt ist und mit jeweils dem anderen nach außen gerichteten Schenkelende (33, 34) eine Durchtrittsöffnung für die Hebel (1) bilden.

16. Vorrichtung nach einem der vorhergehenden Ansprüche, dadurch gekennzeichnet, daß auf den Drehpunkten (7a, b) der Scherenglieder (8) Umlenkräder (15a, b) drehbar gelagert sind, die jeweils mit den zugehörigen losen und festen Kettenrädern (2 bzw. 5) über die Steuerketten (29, 30) verbunden sind.

**Claims**

1. A device for storing objects one by one, for instance for storing metal sheets or sheet articles, having at least one column (24, 25) or the like, in which levers (1) which can be pivoted about the bearing pins (4) are mounted, a lever (1a) which is in the receiving position when an object is placed on being pivoted into its working position and the lever (1b) arranged immediately following the latter being simultaneously pivoted out of its rest position into its receiving position, characterized in that the lever (1) is rigidly connected to a chain wheel (2), on which is situated a control stop (3) perpendicular to the plane of the wheel, in that a loose chain wheel (5), which, in the plane of the wheel, has a control groove (6) having a control angle of 85° to 95°, into which a control stop (3) engages, is mounted parallel to the fixed chain wheel (2) on each bearing pin (4), and in that the mutual interval between the bearing pins (4) can be adjusted via scissor-action members (8).

2. Device according to Claim 1, characterized in that the control stop (3) is arranged in the lower right-hand quadrant of the fixed chain wheel (2) and the control groove (6) of the corresponding loose chain wheel (5) lies on a quadrant arc in the lower quadrant.

3. Device according to one of the preceding claims, characterized in that the scissor-action members (8) between the bearing pins (4) comprise toggle levers (9, 10) and the opening width or stacking interval between the levers (1) can be adjusted via a horizontally mounted spindle (11) which is connected to the lowest scissor-action member (8d) via an adjusting nut (12).

4. Device according to one of the preceding claims, characterized in that the end of the upper scissor-action member (9) has a tension bolt (13) which is secured in the column (24, 25) by a tension nut (14) during the adjustment of the opening width.

5. Device according to one of the preceding claims, characterized in that the bearing pins (4) slide in guide grooves (16a, b) of a column-like supporting profile (17).

6. Device according to one of the preceding claims, characterized in that, at the upper end, the supporting profile (17) has a cover (18) which covers at least the guiding and stop elements.

7. Device according to Claim 6, characterized in that the tension bolt (13) is passed through the cover (18) and is secured by a tension nut (14).

8. Device according to one of the preceding claims, characterized in that each lever (1) comprises a carrying arm (19) and a carrying profile (20) which is mounted secure against rotation on the bearing pin (4) and is releasably connected to the carrying arm (19).

9. Device according to Claim 8, characterized in that the carrying profile (20) has an octagonal bore and the bearing pin (4) is of octagonal design in the region of the carrying profile (20).

10. Device according to one of the preceding claims, characterized in that the levers (1) have at least one stop face which strikes against webs of the column-like supporting profile (17) in the working and rest position.

11. Device according to one of the preceding claims, characterized in that the stop face of the levers (1) is formed on a separate stop profile (21) which is mounted by means of an octagonal bore on the correspondingly shaped bearing pin (4), the stop face striking against the outside of the guide groove (16) in the manner of a finger.

12. Device according to one of the preceding claims, characterized in that, parallel to the guide groove (16), a locking profile (22) is attached to the supporting profile (17) which, via an eccentric (23), presses the stop surface of the stop profile against the outer wall of the guide groove.

13. Device according to claim 12, characterized in that the column comprises a base column (24) having the scissor-action members and a top part (25) without scissor-action members, the locking profiles (22) in the base column (24) and in the top part (25) being connected together via a mounting pin (26) in a manner secure against rotation.

14. Device according to claims 12 or 13, characterized in that the open ends of the supporting profile are fitted with an edge protector (27, 28).

15. Device according to one of the preceding claims, characterized in that the column (24, 25) comprises a U-profile, adjoining which, at the open side 2, there are angled webs which are attached by in each case one flange end (31, 32) to the open side of the U-profile and together with the other outward-pointing flange end (33, 34) in each case, form a through-opening for the levers (1).

16. Device according to one of the preceding claims, characterized in that deflection pulleys (15a, b) which are in each case connected to the associated loose and fixed chain wheels (2 and 5 respectively) via the control chains (29, 30) are rotatably mounted on the pivots (7a, b) of the scissor-action members (8).

## Revendications

1. Dispositif pour le stockage d'objets à une certaine distance l'un de l'autre, en particulier pour le stockage de tôle ou d'objets en forme de tôle, comportant au moins une colonne (24, 25) ou analogue, dans laquelle sont supportés des leviers (1) qui peuvent pivoter autour de tourillons (4), étant précisé que l'on fait pivoter dans sa position de travail un levier (1a) qui se trouve, lorsque l'on pose un objet, en position de réception et que simultanément on fait pivoter en position de réception, depuis sa position de repos, le levier (1b) disposé immédiatement à la suite du précédent, caractérisé en ce que le levier (1) est solidarisé avec une roue à chaîne (2) sur laquelle se trouve, perpendiculairement au plan de la roue, une butée de commande (3); en ce que sur chaque tourillon (4) porte, parallèlement à la roue à chaîne fixée au levier (2), une roue à chaîne libre (5) qui présente dans le plan de la roue une rainure de commande (6), d'un angle de commande de 85 à 95°, dans laquelle vient en prise la butée de commande (3); et en ce que l'on peut régler la distance des tourillons (4) l'un en dessous de l'autre au moyen d'éléments de compas (8).

2. Dispositif selon la revendication 1, caractérisé en ce que la butée de commande (3) est disposée dans le quadrant inférieur droit de la roue à chaîne fixée au levier (2); et en ce que la rainure de commande (6) de la roue à chaîne libre correspondante (5) se trouve sur un arc en quart de cercle dans son quadrant.

3. Dispositif selon l'une des revendications précédentes, caractérisé en ce que les éléments de compas (8), entre les tourillons (4), sont constitués de levier à genouillère (9, 10); et en ce que l'on peut régler l'écartement des compas ou la distance d'empilage entre les leviers (1) au moyen d'une vis-mère (11) disposée horizontalement et reliée avec l'élément de compas le plus bas (8d) par l'intermédiaire d'un écrou de positionnement (12).

4. Dispositif selon l'une des revendications précédentes, caractérisé en ce que l'extrémité de l'élément de compas supérieur (9) présente une vis de tirage (13) que, lors du réglage de l'écartement des compas, on bloque au moyen d'un écrou de tirage (4) prévu sur la colonne (24, 25).

5. Dispositif selon l'une des revendications précédentes, caractérisé en ce que les tourillons (4) coulissent dans des rainures de guidage (16a, b) d'un profilé porteur (17) en forme de colonne.

6. Dispositif selon l'une des revendications précédentes, caractérisé en ce que le profilé porteur (17) présente, à son extrémité supérieure, un couvercle (18) qui recouvre au moins les éléments de guidage et de butée.

7. Dispositif selon la revendication 6, caractérisé en ce que la vis de tirage (13) passe à travers le couvercle (18) et en ce qu'elle est bloquée par un écrou de tirage (14).

8. Dispositif selon l'une des revendications précédentes, caractérisé en ce que chaque levier (1) est constitué d'un bras support (19) et d'un profilé support (20) enfilé, sans possibilité de rotation relative, sur le tourillon (4) et réuni, de façon détachable, au bras support (19).

9. Dispositif selon la revendication 8, caractérisé en ce que le profilé support (20) présente un alésage octogonal; et en ce que le tourillon (4) a la forme d'un octogone mâle au voisinage du profilé support (20).

10. Dispositif selon l'une des revendications précédentes, caractérisé en ce que les leviers (1) présentent au moins chacun une surface de butée qui, dans la position de travail et dans la position de repos, bute contre des ailes du profilé porteur en forme de colonne (17).

11. Dispositif selon l'une des revendications précédéntes, caractérisé en ce que la surface de butée des leviers (1) est formée sur un profilé de butée particulier (21), qui s'enfile, par un alésage octogonal, sur le tourillon (4) de forme correspondante, la surface de butée, en forme de doigt, venant buter contre la face extérieure de la rainure de guidage (16).

12. Dispositif selon l'une des revendications précédentes, caractérisé en ce que, parallèlement à la rainure de guidage (16), est rapporté sur le profilé porteur (17) un profilé de verrouillage (22) qui, par l'intermédiaire d'un excentrique (23), presse la surface de butée du profilé de butée contre la paroi extérieure de la rainure de guidage.

13. Dispositif selon la revendication 12, caractérisé en ce que la colonne est constituée d'une colonne de base (24) avec les éléments de compas et d'une rallonge (25) sans les éléments de compas, étant précisé que les profilés de verrouillage (22) dans la colonne de base (24) et dans la rallonge (25) sont réunis l'un à l'autre, sans possibilité de rotation relative, par l'intermédiaire d'un axe enfichable (26).

14. Dispositif selon la revendication 12 ou 13, caractérisé en ce que les extrémités ouvertes du profilé porteur sont équipées d'une protection de bordure (27, 28).

15. Dispositif selon l'une des revendications précédentes, caractérisé en ce que la colonne (24, 25) est constituée d'un profilé en U auquel se raccordent, du côté ouvert, deux ailes de forme angulaire qui sont fixées respectivement par une extrémité de l'aile (31, 32), au côté ouvert du profilé en U et forment avec chaque fois, l'autre extrémité d'aile (33, 34), dirigée vers l'extérieur, une ouverture de passage pour les leviers (1).

16. Dispositif selon l'une des revendications précédentes, caractérisé en ce qu'aux points de rotation (7a, b) des éléments de compas (8) tourillonnent des roues de changement de direction (15a, b) qui sont respectivement réunies avec les roues à chaîne libres et fixes correspondantes (2 ou 5) par l'intermédiaire des chaînes de commande (29, 30).

Fig. 1

Fig.2

1a
9a
10a
22a

16a
4a
21a

1b
10b
22b

16b
4b
21b

1c
9c
10c
22c

16c
4c
21c

Fig.3

4
16
21
22
23
1
9

21
20

Fig.4

Fig. 5

Fig. 6

Fig. 7

EP 0 197 367 B1

Fig. 9

Fig. 8

9

Fig. 10

16

25

22a

26

16

22 b    24

16    Fig. 11

22a    25

26

22 b    24

23

22

Fig. 12

22

16    23    24

11

Fig. 13